# EUROPEAN PATENT APPLICATION

(11) **EP 4 571 089 A1**
(43) Date of publication of application: **18.06.2025**
(21) Application number: 24219908.1
(22) Date of filing: 13.12.2024
(51) Int. Cl.: F02K 5/00, B64D 27/33, F02C 9/46

(54) **HYBRID AIRCRAFT ENGINE WITH COMPRESSOR CONTROL FOR ELECTRIC MOTOR FAILURE**

(30) Priority: 15.12.2023 US 202318542099
(71) Applicant: RTX Corporation, Farmington, CT 06032 (US)
(72) Inventor: AMARI, Martin, Farmington, 06032 (US); VAN NOPPEN, William L., Farmington, 06032 (US); ADAMS, Joshua, Farmington, 06032 (US); COLLOPY, Gary, Farmington, 06032 (US)
(74) Representative: Dehns

(57) **Abstract**

A hybrid engine (20) includes a gas turbine engine (21) having at least one compressor rotor connected to be driven by at least one turbine rotor. A combustor (40) is connected to receive compressed air from the at least one compressor rotor, and to receive fuel. At least one electric motor (42, 48) is connected to drive the at least one compressor rotor to supplement drive in combination with the at least one turbine rotor. A hybrid engine controller (50) includes processing circuitry (96) and a memory (98) storing instructions that, when executed cause the processing circuitry (96) to control a flow of the fuel to the combustor (40), control the at least one electric motor (42, 48). Feedback is received on an operating condition of the hybrid engine (20) indicative of a failure of the at least one electric motor (42, 48). The at least one compressor (30, 34) is controlled in a first mode to operate at a compressor pressure ratio spaced from a stall pressure ratio that could result in a stall of the at least one compressor (30, 34) based on the operating condition not indicating a potential failure of the at least one electric motor (42, 48). The at least one compressor (30, 34) is controlled to move to a second mode where the compressor pressure ratio is closer to the stall pressure ratio than in the first mode based on the hybrid engine controller (50) determining that a failure of the at least one electric motor failure occurred. A method is also disclosed.

## Description

### TECHNICAL FIELD

This application relates to a hybrid engine controller for a hybrid engine including a gas turbine engine and an electric motor, wherein the hybrid engine controller changes operation of a compressor in the gas turbine engine in the event of electric motor failure.

### BACKGROUND OF THE INVENTION

Hybrid engines are known which incorporate a gas turbine engine and an electric motor.

An aircraft gas turbine engine typically includes a propulsor delivering air into a core engine having compressor and turbine sections. The air is compressed in the compressor and delivered into a combustor where it is mixed with fuel and ignited. Products of the combustion pass through at least one turbine rotor, driving it to rotate. The turbine rotor in turn drives a compressor rotor.

More recently, hybrid engines are being considered wherein an electric motor supplements the drive from the turbine section. Thus, at high power operation, such as take off of an aircraft associated with the hybrid engine, the electric motor will supplement the drive to the compressor section. The electric motor may be controlled to stop at lower power operations such as in descent.

### SUMMARY OF THE INVENTION

In an aspect of the present invention, a hybrid engine includes a gas turbine engine having at least one compressor rotor connected to be driven by at least one turbine rotor. A combustor is connected to receive compressed air from the at least one compressor rotor, and to receive fuel. At least one electric motor is connected to drive the at least one compressor rotor to supplement drive in combination with the at least one turbine rotor. A hybrid engine controller includes processing circuitry and a memory storing instructions that, when executed cause the processing circuitry to control a flow of the fuel to the combustor, control the at least one electric motor. Feedback is received on an operating condition of the hybrid engine indicative of a failure of the at least one electric motor. The at least one compressor is controlled in a first mode to operate at a compressor pressure ratio spaced from a stall pressure ratio that could result in a stall of the at least one compressor based on the operating condition not indicating a potential failure of the at least one electric motor. The at least one compressor is controlled to move to a second mode where the compressor pressure ratio is closer to the stall pressure ratio than in the first mode based on the hybrid engine controller determining that a failure of the at least one electric motor failure occurred.

In an embodiment of the above, the at least one compressor rotor includes a low pressure compressor and a high pressure compressor. The at least one turbine rotor includes a high pressure turbine and a low pressure turbine. The low pressure turbine drives the low pressure compressor through a shaft as a low pressure spool, and the high pressure turbine drives the high pressure compressor through a shaft as a high pressure spool.

In another embodiment according to any of the previous embodiments, the low pressure spool further includes a propulsor.

In another embodiment according to any of the previous embodiments, the propulsor is driven through a gear reduction.

In another embodiment according to any of the previous embodiments, the at least one electric motor includes a first electric motor driving the low pressure spool and a second electric motor driving the high pressure spool.

In another embodiment according to any of the previous embodiments, the operating condition indicative of a potential failure in the at least one electric motor is the speed of the low pressure spool.

In another embodiment according to any of the previous embodiments, the high pressure compressor is the at least one compressor controlled by the hybrid engine between the first and second modes.

In another embodiment according to any of the previous embodiments, the condition indicative of the potential failure in the electric motor is the thrust provided by the hybrid engine.

In another embodiment according to any of the previous embodiments, the hybrid engine controller is a model predictive control.

In another embodiment according to any of the previous embodiments, the instructions, when executed, cause the processing circuitry to in the first mode, control the compressor pressure ratio across the high pressure compressor to be spaced from the stall pressure ratio by a first higher percentage and in the second mode move the compressor pressure ratio to be closer to the stall pressure ratio than it is in the first mode.

In another embodiment according to any of the previous embodiments, a percentage difference between the compressor pressure ratio and the stall pressure ratio in the second mode is less than five percent.

In another embodiment according to any of the previous embodiments, the percentage difference is less than two percent.

In another embodiment according to any of the previous embodiments, the instructions, when executed cause the processing circuitry to attempt to keep the compressor pressure ratio equal to the stall pressure ratio for at least an early portion of operation of the hybrid engine.

In another embodiment according to any of the previous embodiments, the early portion of the operation of the hybrid engine occurs at a take-off condition of an associated aircraft.

In another aspect of the present invention, a method of operating a hybrid engine includes the steps of operating a gas turbine engine having at least one compressor rotor driven by at least one turbine rotor, a combustor connected to receive compressed air from the at least one compressor rotor, and to receive fuel. At least one electric motor is operated to drive the at least one compressor rotor to supplement drive provided by the at least one turbine rotor. A flow of fuel is controlled to the combustor, and controls the at least one electric motor, and receives feedback on an operating condition of the hybrid engine indicative of a failure of the at least one electric motor. The at least one compressor is controlled to in a first mode achieve a compressor pressure ratio spaced from a stall pressure ratio across the at least one compressor that could result in a stall of the at least one compressor based on the operating condition not indicating a failure of the electric motor, and to move to a second mode where the compressor pressure ratio is closer to the stall pressure ratio than in the first mode based on the operating condition indicating an electric motor failure.

In an embodiment of the above, the at least one compressor rotor includes a low pressure compressor and a high pressure compressor. The at least one turbine rotor includes a high pressure turbine and a low pressure turbine. The low pressure turbine drives the low pressure compressor through a shaft as a low pressure spool, and the high pressure turbine driving the high pressure compressor through a shaft as a high pressure spool

In another embodiment according to any of the previous embodiments, the operating condition indicative of a potential failure in the at least one electric motor is the speed of the low pressure spool.

In another embodiment according to any of the previous embodiments, the compressor pressure ratio is across the high pressure compressor.

In another embodiment according to any of the previous embodiments, in the first mode, the compressor pressure ratio across the high pressure compressor is spaced from the stall pressure ratio by a first higher percentage, and in the second mode the compressor pressure ratio is closer to the stall pressure ratio.

In another embodiment according to any of the previous embodiments, the condition indicative of the potential failure in the electric motor is the thrust provided by the hybrid engine.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1A schematically shows an example hybrid engine.
Figure 1B schematically shows an example hybrid engine controller.
Figure 2 is a graph showing several possible scenarios during operation of the hybrid engine of Figure 1.
Figure 3 is a flowchart for a control algorithm under this disclosure.
Figure 4 shows a graph of pressure ratio versus air mass delivered into a compressor section during a normal acceleration.
Figure 5 shows a graph of pressure ratio across the compressor section and air mass delivered into the compressor section controlled to operate in a second mode when an electric motor is determined to have failed.

### DETAILED DESCRIPTION

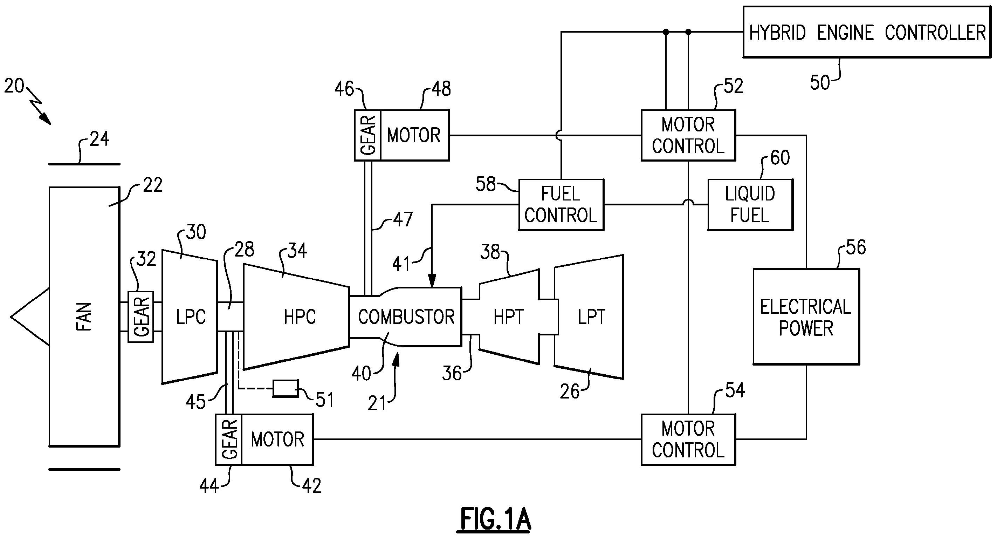

Figure 1A shows a hybrid engine 20. The hybrid engine 20 includes a gas turbine engine 21 including a propulsor 22, which may be a fan enclosed within a fan case 24 to provide bypass air as propulsion. Propulsor 22 is driven by a low pressure turbine section 26 (with one or more rotors). Low pressure turbine 26 drives a shaft 28 to in turn drive a low pressure compressor 30. Low pressure compressor 30 drives a gear reduction 32 to in turn drive the propulsor 22. The low pressure turbine 26, shaft 28, low pressure compressor 30 and propulsor 22 may be referred to as a low pressure spool.

A high pressure compressor 34 is downstream of low pressure compressor 30, and is driven by a shaft 36 through a high pressure turbine section 38 (with one or more rotors). The propulsor 22 also delivers air into a core engine including the low pressure compressor 30, which compresses the air and delivers it to high pressure compressor 34. The compressed air from high pressure compressor 34 is delivered into a combustor 40 where it is mixed with fuel from line 41, and ignited. Products of the combustion pass downstream over the high pressure turbine section 38, and then the low pressure turbine section 26.

A low pressure electric motor 42 may be configured to drive the shaft 28 through a gear transmission 44 and a shaft 45. In such a configuration, the low pressure compressor 30, the gear reduction 32, and the propulsor 22 are driven by the low pressure turbine 26 in combination with the low pressure electric motor 42.

A high pressure spool is defined by high pressure compressor 34, shaft 36, and high pressure turbine 38. A high pressure electric motor 48 may additionally be configured to drive the high pressure spool through a gear transmission 46 and shaft 47.

A hybrid engine controller 50 controls a high pressure electric motor control 52 and a low pressure electric motor control 54 to achieve a desired speed from the respective electric motors 48 and 42. The hybrid engine control 50 further controls fuel control 58 to deliver a desired amount of fuel from a source 60 through line 41 into combustor 40. Controlling the amount of fuel delivered into the combustor 40 allows control over the speed and thrust delivered by the gas turbine engine 21.

As shown schematically, a sensor 51 monitors the speed of the low pressure spool 26/28/30.

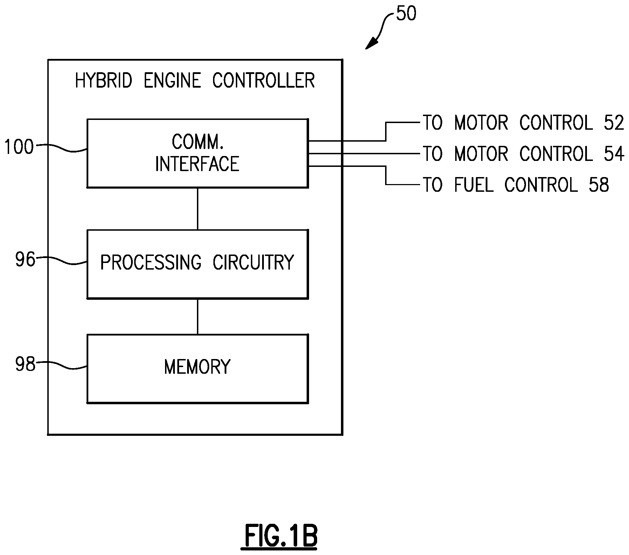

The hybrid engine controller 50 may include aspects as found in current full authority digital electronic controls ("FADEC") for standard gas turbine engines, and also provided with controls for the electric motors. More generally, the control as utilized to provide the method of this disclosure is described below and illustrated in Figure 1B, schematically.

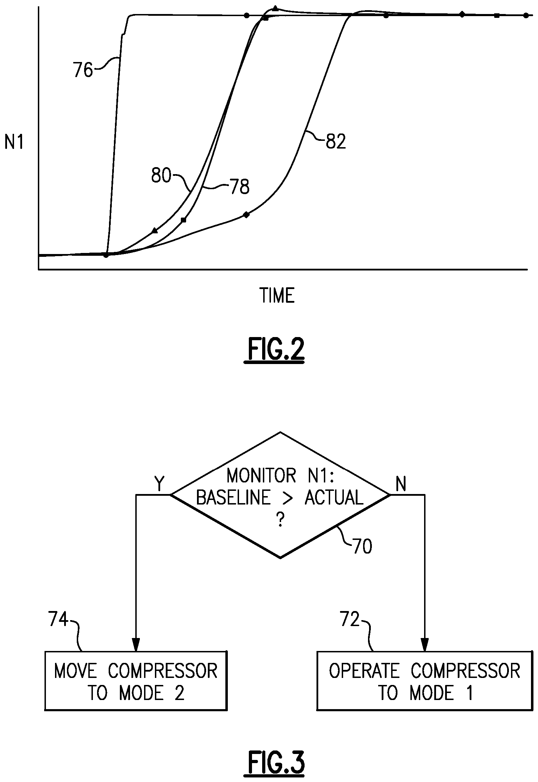

Figure 1B schematically shows an example implementation of the hybrid engine controller 50 of Figure 1A. The controller 50 includes processing circuitry 96 operatively connected to memory 98 and a communication interface 100. The processing circuitry 96 may include one or more microprocessors, microcontrollers, application specific integrated circuits (ASICs), or the like. The memory 98 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 98 may incorporate electronic, magnetic, optical, and/or other types of storage media. The memory 98 stores instructions which, when executed by the processing circuitry 96, cause the processing circuitry 96 to implement the various features discussed below (e.g., the method of Figure 3).

The communication interface 100 is operable to facilitate communication between the controller 24 and other devices, such as controls 52, 54 and 58.

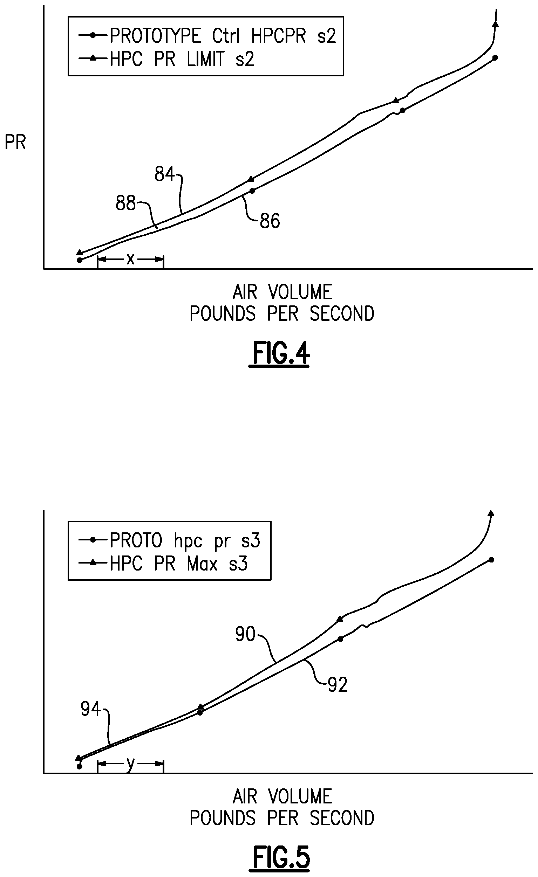

The hybrid engine controller 50 may be a model predictive control (MPC) that allows the controller to project into the future what demands will be placed on the overall hybrid engine 20, and can predict when the do not exceed line 84/90 (as illustrated in Figure 4) will be reached.

During normal operating conditions, the electric motors 42 and/or 48 may supplement power generated by the gas turbine engine 21. However, in an emergency situation, such as when an electric motor fails, the gas turbine engine 21 may be required to provide the power sufficient to keep an associated aircraft flying.

Figure 2 is a graph showing N1 speed against time. N1 is the speed of the low spool. As shown at 76, a pilot (or computer system in an unmanned aircraft) has commanded a take-off speed for N1, such as by operating the throttle of the associated aircraft. Line 78 illustrates a baseline N1 speed rate in a standard gas turbine engine (e.g., not a hybrid engine). Line 80 illustrates a normal N1 speed rate to the commanded speed 76 for a properly functioning hybrid engine. However, line 82 shows how the speed would approach the commanded speed 76 in the event of an electric motor failure.

While Figure 2 is a graph showing the N1 speed, it should be understood that other variables indicative of the overall operation of the hybrid engine 20, and in particular an apparent failure of an electric motor, could be utilized. As examples only, the provided thrust of the hybrid engine 20 or the speed of a high pressure spool including a turbine 38, shaft 36, and compressor 34 may be monitored.

Figure 3 is a flowchart of operation of the hybrid engine 20 under this disclosure.

At step 70, the method of this disclosure monitors the N1 speed and asks if the baseline 78 is greater than the actual N1 (e.g., line 82) by a predetermined amount at a particular time. If the answer is no, then at step 72 the hybrid engine controller 50 operates the hybrid engine 20 in a mode 1 as explained below with reference to Figure 4. However, should the hybrid engine controller 50 determine that the baseline 78 is greater than the actual N1 by more than a predetermined maximum at the particular time, then at step 74 the controller is programmed to, based on that determination, move operation of at least one of the compressors to mode 2.

It should be understood that in any such hybrid engine, the hybrid engine controller 50 would be controlling the overall hybrid engine 20 to achieve a number of distinct goals. As an example, temperature limits across the engine and absolute pressure limits are monitored and controlled. However, the difference between mode 1 and mode 2 in this disclosure has to do with a pressure ratio across at least one of the compressors 30 and 34.

In a disclosed embodiment, the high pressure compressor 34 is controlled between modes 1 and 2, and the low speed spool speed N1 is used to identify a motor failure.

Figure 4 shows a graph of pressure ratio across the high pressure compressor 34 against air volume delivered into the high pressure compressor 34 in pounds per second. This is mode 1 operation. A region X is shown early in the operation of the hybrid engine 20. As shown, a "not to exceed" line 84 is determined to identify a pressure ratio that could result in stall of the high pressure compressor 34. Stall of a compressor in a gas turbine engine 21 is an undesired occurrence.

In known gas turbine engine controls, the pressure ratio that could lead to stall, and as shown here do not exceed line 84, is known. Known gas turbine engine controls typically avoid the pressure ratio that could potentially result in stall by a first percentage.

As disclosed herein, the hybrid engine controller 50 changes that percentage (e.g., the first percentage) should a determination be made that the electric motor may have failed, and such that the percentage is less in mode 2 than it was in mode 1.

Curve 86 is an operating line that the controller 50 attempts to drive the high pressure compressor 34 to achieve.

As known, the likelihood of stall is greatest at an early point in operation identified by area X.

During the entire operation of the hybrid engine, the hybrid engine controller 50 maintains the actual operating line 86 to be spaced from the do not exceed line 84 by an amount 88.

However, should a failure event occur as shown at curve 82 in Figure 2, there may be insufficient time to achieve take-off thrust should engine 21 continue to operate in mode 1.

Thus, as shown in Figure 5, the mode 2 is entered if there is an identification by hybrid engine controller 50 that at least one electric motor has apparently failed. In the control mode 2 illustrated in Figure 5, the do not exceed curve 90 and actual operating line 92 are illustrated. In an early period Y, there is a time period identified at 94 wherein the operating line 92 is moved much closer to the do not exceed line 90 than was utilized in mode 1 of Figure 4.

In embodiments, the difference between the operating line 86 and the do not exceed line 84 in the Figure 4 normal operation may be on the order of five percent, as an example. However, in the control mode 2 as shown in Figure 5, that difference will be much less. As an example, the difference may be less than five percent. In other embodiments, the difference could be less than two percent. In other embodiments, the difference could be less than .05 percent. In fact, the hybrid engine controller 50 attempts to drive operating line 86 to be equal to the do not exceed line 90 through this early period of operation Y.

In one embodiment, the hybrid engine controller 50 controls the fuel control 58 and other end effectors to drive the high pressure compressor 34 to achieve the pressure ratios in modes 1 and 2.

The hybrid engine controller 50 is programmed to minimize the time it will take for the hybrid engine 20 to reach the commanded speed 80 in the event of an electric motor failure. At the same time, the hybrid engine controller 50 is operating to avoid temperature limits and absolute pressure limits on the components within the gas turbine engine 21.

Since the control is part of the hybrid engine controller 50, control fault detection and analysis logic is not involved in the method of this disclosure. The controller 50 is using a closing loop on speed N1, other speed, or thrust of the engine. No failure detection is required of the motors 42 or 48 for the operating line change between mode 1 and mode 2.

Instead, the hybrid engine controller 50 simply receives feedback on the N1 speed, or thrust, or other speed, and identifies that is it is not where it should be. Hybrid engine controller 50 then commands more fuel to the combustor. If the required acceleration is significant enough that the compressor is projected by the hybrid engine controller 50 to exceed the do not exceed line or curve, the hybrid engine controller 50 slows the acceleration down such that the actual operating line remains under the do not exceed limit, but the engine continues to accelerate as quickly as possible.

A hybrid engine under this disclosure could be said to include a gas turbine engine having at least one compressor rotor connected to be driven by at least one turbine rotor. A combustor is connected to receive compressed air from the at least one compressor rotor, and to receive fuel. At least one electric motor is connected to drive the at least one compressor rotor to supplement drive in combination with from the at least one turbine rotor. A hybrid engine controller includes processing circuitry and memory storing instructions that, when executed cause the processing circuitry to control a flow of the fuel to the combustor, control the at least one electric motor. Feedback is received on an operating condition of the hybrid engine indicative of a failure of the at least one electric motor. The at least one compressor is controlled in a first mode to operate at a compressor pressure ratio spaced from a stall pressure ratio that could result in a stall of the at least one compressor based on the operating condition not indicating a potential failure of the at least one electric motor. The at least one compressor is controlled to move to a second mode where the compressor pressure ratio is closer to the stall pressure ratio than in the first mode based on the hybrid engine controller determining that a failure of the at least one electric motor occurred.

A method of operating a hybrid engine under this disclosure could be said to include the steps of operating a gas turbine engine having at least one compressor rotor driven by at least one turbine rotor, a combustor connected to receive compressed air from the at least one compressor rotor, and to receive fuel. At least one electric motor is operated to drive the at least one compressor rotor to supplement drive provided by the at least one turbine rotor. A flow of fuel is controlled to the combustor. Feedback is received on an operating condition of the hybrid engine indicative of a failure of the at least one electric motor. The at least one compressor is controlled in a first mode to achieve a compressor pressure ratio spaced from a stall pressure ratio across the at least one compressor that could result in a stall of the at least one compressor based on the operating condition not indicating a failure of the electric motor. The at least one compressor is controlled in a second mode where the compressor pressure ratio is closer to the stall pressure ratio than in the first mode based on the operating condition indicating an electric motor failure.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. A hybrid engine comprising:
a gas turbine engine (21) having at least one compressor rotor connected to be driven by at least one turbine rotor, a combustor (40) connected to receive compressed air from the at least one compressor rotor, and to receive fuel;
at least one electric motor (42, 48) connected to drive the at least one compressor rotor to supplement drive in combination with the at least one turbine rotor; and
a hybrid engine controller (50) comprising processing circuitry (96) and a memory (98) storing instructions that, when executed cause the processing circuitry (96) to:
control a flow of the fuel to the combustor (40);
control the at least one electric motor (42, 48);
receive feedback on an operating condition of the hybrid engine (20) indicative of a failure of the at least one electric motor (42, 48);
control at least one compressor (30, 34) to, in a first mode, operate at a compressor pressure ratio spaced from a stall pressure ratio that could result in a stall of the at least one compressor (30, 34) based on the operating condition not indicating a potential failure of the at least one electric motor (42, 48); and
control the at least one compressor (30, 34) to move to a second mode where the compressor pressure ratio is closer to the stall pressure ratio than in the first mode based on the hybrid engine controller (50) determining that a failure of the at least one electric motor occurred.

2. The hybrid engine as set forth in claim 1, wherein the at least one compressor rotor includes a low pressure compressor (30) and a high pressure compressor (34), and the at least one turbine rotor includes a high pressure turbine (38) and a low pressure turbine (26), the low pressure turbine (26) driving the low pressure compressor (30) through a shaft (28) as a low pressure spool, and the high pressure turbine (38) driving the high pressure compressor (34) through a shaft (36) as a high pressure spool.

3. The hybrid engine as set forth in claim 2, wherein the low pressure spool further includes a propulsor (22), optionally wherein the propulsor (22) is driven through a gear reduction (32).

4. The hybrid engine as set forth in claim 2 or 3, wherein the at least one electric motor (42, 48) includes a first electric motor (42) driving the low pressure spool and a second electric motor (48) driving the high pressure spool.

5. The hybrid engine as set forth in any of claims 2 to 4, wherein the operating condition indicative of a potential failure in the at least one electric motor (42, 48) is the speed of the low pressure spool.

6. The hybrid engine as set forth in any of claims 2 to 5, wherein the high pressure compressor (34) is the at least one compressor (34) controlled by the hybrid engine (20) between the first and second modes.

7. The hybrid engine as set forth in any of claims 2 to 6, wherein the instructions, when executed, cause the processing circuitry (96) to:
in the first mode, control the compressor pressure ratio across the high pressure compressor (34) to be spaced from the stall pressure ratio by a first higher percentage; and
in the second mode move the compressor pressure ratio to be closer to the stall pressure ratio than it is in the first mode.

8. The hybrid engine as set forth in any preceding claim, wherein the condition indicative of the potential failure in the electric motor (42, 48) is the thrust provided by the hybrid engine (20).

9. The hybrid engine as set forth in any preceding claim, wherein the hybrid engine controller (50) is a model predictive control.

10. The hybrid engine as set forth in any preceding claim, wherein a percentage difference between the compressor pressure ratio and the stall pressure ratio in the second mode is less than five percent, optionally wherein the percentage difference is less than two percent.

11. The hybrid engine as set forth in any preceding claim, wherein the instructions, when executed cause the processing circuitry (96) to attempt to keep the compressor pressure ratio equal to the stall pressure ratio for at least an early portion of operation of the hybrid engine (20), optionally wherein the early portion of the operation of the hybrid engine (20) occurs at a take-off condition of an associated aircraft.

12. A method of operating a hybrid engine including the steps:
operating a gas turbine engine (21) having at least one compressor rotor driven by at least one turbine rotor, a combustor (40) connected to receive compressed air from the at least one compressor rotor, and to receive fuel;
operating at least one electric motor (42, 48) to drive the at least one compressor rotor to supplement drive provided by the at least one turbine rotor;
controlling a flow of fuel to the combustor (40), and controlling the at least one electric motor (42, 48), and receiving feedback on an operating condition of the hybrid engine (20) indicative of a failure of the at least one electric motor (42, 48); and
controlling at least one compressor (30, 34) to, in a first mode, achieve a compressor pressure ratio spaced from a stall pressure ratio across the at least one compressor (30, 34) that could result in a stall of the at least one compressor (30, 34) based on the operating condition not indicating a failure of the electric motor (42, 48), and to move to a second mode where the compressor pressure ratio is closer to the stall pressure ratio than in the first mode based on the operating condition indicating an electric motor failure.

13. The method as set forth in claim 12, wherein the at least one compressor rotor includes a low pressure compressor (30) and a high pressure compressor (34), and the at least one turbine rotor includes a high pressure turbine (38) and a low pressure turbine (26), the low pressure turbine (26) driving the low pressure compressor (30) through a shaft (28) as a low pressure spool, and the high pressure turbine (38) driving the high pressure compressor (34) through a shaft (36) as a high pressure spool, optionally wherein the operating condition indicative of a potential failure in the at least one electric motor (42, 48) is the speed of the low pressure spool.

14. The method as set forth in claim 13, wherein the compressor pressure ratio is across the high pressure compressor (34), optionally wherein in the first mode, the compressor pressure ratio across the high pressure compressor (34) is spaced from the stall pressure ratio by a first higher percentage, and in the second mode the compressor pressure ratio is closer to the stall pressure ratio.

15. The method as set forth in any of claims 12 to 14, wherein the condition indicative of the potential failure in the electric motor (42, 48) is the thrust provided by the hybrid engine (20).
